# EUROPEAN PATENT APPLICATION

(11) **EP 1 080 777 A1**
(43) Date of publication of application: **07.03.2001**
(21) Application number: 00118758.2
(22) Date of filing: 30.08.2000
(51) Int. Cl.: B01D 71/68, C08G 75/23, B01D 61/14

(54) **Ultrafiltration membrane and method for producing the same, dope composition used for the same**

(30) Priority: 31.08.1999 US 387573
(71) Applicant: NITTO DENKO CORPORATION, Ibaraki-shi, Osaka 567-8680 (JP)
(72) Inventor: Matsumoto, Kenji, c/o Hydranautics, CA 92054 (US); Hamada, Toshimitsu, c/o Hydranautics, CA 92054 (US); Ikeyama, Norio, c/o Hydranautics, CA 92054 (US); Ogurisu, Tatsuya, c/o Hydranautics, CA 92054 (US)
(74) Representative: Koepe, Gerd L.

(57) **Abstract**

An ultrafiltration membrane comprises a composition including 40-99.5 weight % of polyethersulfone, 0.1-50 weight % of polyvinylpyrrolidone and 0.1-40 weight % of sulfonated polyethersulfone. This composition can form an ultrafiltration membrane suitable for treatment of surface water. The ultrafiltration membrane is hydrophilic and resistant to contamination, so it can be used for various purposes such as purification of water from rivers, wells and seas, and it can also be used to provide general industrial water, and to treat waste water or the like. The present invention further provides a dope composition and a method for producing ultrafiltration membranes.

## Description

The present invention relates to polyethersulfone membranes. The membrane can be used for filtration or purification of water from rivers, lakes, wells, seas or the like, or for providing general industrial water and treating waste water.

Conventionally, various polymer compounds including polysulfone, polyacrylonitrile, cellulose acetate, polyamide, polycarbonate and polyvinyl alcohol, have been used as membrane materials for ultrafiltration and/or microfiltration of liquids. Among these materials, polysulfone-based compounds are preferred as membrane materials because of their superior resistance to heat, acids, alkali and other chemicals.

Polysulfone in this specification usually comprises a repeating unit of Formulas (1) or (2) described below:

-O-C₆H₄-C(CH₃)₂-C₆H₄-O-C₆H₄-SO₂-C₆H₄- (1)

-O-C₆H₄-SO₂-C₆H₄- (2)

Generally however, polysulfone is hydrophobic in nature, and is inferior with respect to certain properties such as contamination resistance. JP-A-61-238306 (1986) and JP-B-3-47127 (1991) disclose the use of hydrophilic polyvinylpyrrolidone or the like that is compatible with polysulfone to improve compatibility in the production of porous films. US-A- 4,618,553 discloses a hydrophilic treatment for polysulfone surfaces. However, most treatments which attempt to provide hydrophilic surfaces are complicated and costly in general.

Examples of sulfonated polysulfone-based polymers that are negatively charged include polyarylethersulfone copolymer. US-A-4,273,903 discloses a method for producing such copolymers. Sulfonated polysulfone polymers, which can form semipermeable membranes, are disclosed, for example, in US-A-4,990,252, JP-B-2-52528 (1990), JP-B-2-52529 (1990), JP-B-5-2364 (1993), JP-B-5-2365 (1993), and JP-B-5-10967 (1993). Membranes formed by applying a sulfonated polysulfone polymer on polysulfone generally have improved hydrophilicity and they are negatively charged. The membranes have good resistance to chlorine, acids, and alkali. Additionally, the membrane is negatively charged, contamination due to negatively-charged colloidal particles that are suspended in a solution being passed through the membrane can be decreased. Conventionally however, special solvents are required to apply sulfonated polysulfone on polysulfone, and this raises the cost of such membranes. Furthermore, a membrane made in this way will be a tight membrane having a nano-filtration level between a reverse osmosis membrane and an ultrafiltration membrane. It is difficult to obtain a coarse membrane, i.e., an ultrafiltration membrane, which can be used for removing bacteria and viruses.

The inventors have reached this invention by solving the above-mentioned disadvantages. Especially, optimal amounts of polyvinylpyrrolidone and sulfonated polyethersulfone are added to improve the hydrophilicity of the polyethersulfone membrane. Thus, the present invention provides an ultrafiltration membrane for treating surface water, a method for producing the same, and a dope composition used to form the same. The ultrafiltration membrane is difficult to contaminate during filtration of water from rivers, lakes, underground water or the like due to its hydrophilicity and negative charge, and it can remove bacteria and viruses with efficiency.

The present invention includes an ultrafiltration membrane comprising a composition including polyethersulfone ranging from 40 to 99.5 weight %, polyvinylpyrrolidone ranging from 0.1 to 50 weight %, and sulfonated polyethersulfone ranging from 0.1 to 40 weight %.

When the contents are out of the above-described range, the membrane's flux is lowered and the membrane cannot have an effective contamination resistance. Another undesirable effect is deterioration of the membrane strength.

It is preferable that an ultrafiltration membrane in accordance with the present invention is a type of membrane selected from the group consisting of open-tubular (capillary) membranes, flat membranes, tubular membranes, and hollow-fiber membranes.

It is preferable that an ultrafiltration membrane in accordance with the present invention has pores having a size sufficiently small to allow removal of bacteria or viruses.

It is preferable that an ultrafiltration membrane in accordance with the present invention has pores having a size sufficiently small to allow removal of substances having a diameter of at least 5nm.

It is preferable that the sulfonated polyethersulfone is obtained by partially sulfonating a polysulfone comprising the following repeating unit (A):

-[O-C₆H₄-O-C₆H₄-SO₂-C₆H₄]- (A)

where -C₆H₄- group is a phenylene group.

The present invention also includes a dope composition for forming an ultrafiltration membrane in accordance with the present invention. Dope compositions in accordance with the present invention comprise 16-22 weight % of polyethersulfone, 5-12 weight % of polyvinylpyrrolidone, 7-12 weight % of nonsolvent or a swelling agent (hereinafter referred to collectively as nonsolvent) for the polyethersulfone, 0.1-10 weight % of sulfonated polyethersulfone, and 46-71.9 weight % of aprotic solvent.

In the dope composition, it is preferable that the sulfonated polyether sulfone is obtained by partially sulfonating a polysulfone comprising the following repeating unit (A):

-[O-C₆H₄-O-C₆H₄-SO₂-C₆H₄]- (A)

where -C₆H₄- group is a phenylene group.

It is preferable that the aprotic solvent comprises at least one solvent selected from the group consisting of dimethyl sulfoxide, dimethyl acetamide, dimethyl formamide, N-methyl-2-pyrrolidone and dioxane.

It is preferable that the aprotic solvent comprises N-methyl-2-pyrrolidone.

It is preferable that the nonsolvent for the polyethersulfone comprises at least one selected from the group consisting of ZnCl₂, alcohols, glycerol and water.

It is preferable that the nonsolvent for the polyethersulfone comprises glycerol.

It is preferable that the dope composition has a viscosity ranging from 10KcP to 1000KcP.

The present invention also includes a method for producing an ultrafiltration membrane, the method comprising the steps of: providing a dope composition comprising 16-22 weight % of polyethersulfone, 5-12 weight % of polyvinylpyrrolidone, 7-12 weight % of nonsolvent for the polyethersulfone, 0.1-10 weight % of sulfonated polyethersulfone, and 46-71.9 weight % of aprotic solvent; forming either a hollow or flat structure comprising the dope composition; and removing the aprotic solvent and the nonsolvent for the polyethersulfone. An ultrafiltration membrane such as an open-tubular (capillary) membrane, a flat membrane, a tubular membrane or a hollow-fiber membrane can be formed by this method. Preferably, the step of forming a hollow structure comprising the dope composition comprises tubular extrusion and open-tubular fiber extrusion, while the step of forming a flat structure comprising the dope composition comprises application of the dope composition on a support.

It is preferable in the method that the sulfonated polyethersulfone is prepared by partially sulfonating a polysulfone comprising the following repeating unit (A):

-[O-C₆H₄-O-C₆H₄-SO₂-C₆H₄]- (A)

where -C₆H₄- is a phenylene group.

It is preferable in the method that the aprotic solvent comprises at least one selected from the group consisting of dimethyl sulfoxide, dimethyl acetamide, dimethyl formamide, N-methyl-2-pyrrolidone and dioxane.

It is preferable that the aprotic solvent comprises N-methyl-2-pyrrolidone.

It is preferable that the nonsolvent for the polyethersulfone comprises at least one selected from the group consisting of ZnCl₂, alcohols, glycerol and water.

It is preferable that the nonsolvent for the polyethersulfone comprises glycerol.

It is preferable that a viscosity of the dope composition ranges from 10KcP to 1000KcP.

An ultrafiltration membrane in accordance with the present this invention can be used for treating surface water. Such a membrane is hydrophilic and resistant to contamination, and thus, it can be used for purification of water from rivers, wells and seas, and also for providing general industrial water and treating waste water or the like.

The present invention includes, for example, a capillary filtration membrane comprising polyethersulfone, polyvinylpyrrolidone and sulfonated polyethersulfone. In a particular embodiment of the present invention, the dope composition at membrane-formation comprises 16-22 weight % of polyethersulfone, 5-12 weight % of polyvinylpyrrolidone, 7-12 weight % of glycerol, 46-71.9 weight % of N-methyl-2-pyrrolidone, and 0.1-10 weight % of sulfonated polyethersulfone. A capillary membrane for treating surface water can be produced by coagulating such a dope composition in a nonsolvent. A capillary shape is preferred where, for example, the membrane area at filling is a module or the contamination level of the surface water to be treated is high, but a membrane having similar ability can be obtained if the membrane is flat (it can be made to a spiral or plate type element), tubular or hollow-fiber.

In accordance with the present invention, ultrafiltration membranes can be formed by extruding a dope composition to be tubular or open-tubular, or by applying it on a flat plate and subsequently desorbing the aprotic organic solvent (e.g., N-methyl-2-pyrrolidone) and a solution into water or the like in order to remove the solvent. Pores of a predetermined size are formed by desorbing the organic solvent and solution, and thus, the membrane works as a filtration membrane. The pore size is determined depending on the dope composition, the coagulation solution composition, the film-forming conditions or the like. The details are described in Example 1.

It is preferable that a capillary filtration membrane in accordance with the present invention for treating surface water comprises partially-sulfonated polysulfone comprising the following repeating unit (A):

-[O-C₆H₄-O-C₆H₄-SO₂-C₆H₄]- (A)

where -C₆H₄- group is a phenylene group.

The sulfonate group(s) of the partially-sulfonated polysulfone are represented by the formula -SO₃M where M denotes a hydrogen, an alkali metal or a tetraalkylammonium. The amount of sulfonation is not critical. As sulfonated polysulfone-based polymers have good compatibility with polyethersulfones, they can be dissolved well in a common solvent to make a uniform solution, such as when a dope composition is prepared for membrane-formation.

A solvent is not specifically limited as long as it is an aprotic solvent capable of dissolving components mainly comprising polyethersulfone. Various solvents such as dimethyl sulfoxide, dimethyl acetamide, dimethyl formamide, N-methyl-2-pyrrolidone and dioxane can be used. N-methyl-2-pyrrolidone is preferably used to obtain a capillary membrane useful in this invention.

A nonsolvent in the dope composition is not specifically limited as long as it is a nonsolvent or a swelling agent of polyethersulfone. Typical examples are inorganic salts such as ZnCl₂, organic substances such as alcohols, and water as described in JP-B-48-176 (1973) or the like. Actually, water is most preferred in view of the production cost. The kind and amount of the nonsolvent can be selected by considering its coagulation effects with respect to the dope composition.

A capillary filtration membrane in accordance with the present invention comprises 16-22 weight % of polyethersulfone, 5-12 weight % of polyvinylpyrrolidone, 7-12 weight % of glycerol, 46-71.9 weight % of N-methyl-2-pyrrolidone, and 0.1-10 weight % of sulfonated polyethersulfone. A method for producing a polyethersulfone-based open-tubular fiber membrane is described below.

For producing a polyethersulfone open-tubular fiber membrane, a wet method or a dry-wet method can be used. In a wet method, a solution for forming membranes is directly extruded into a coagulation bath, while in a dry-wet method, the solution is exposed to a gas phase before being extruded into a coagulation bath.

A nonsolvent used for the coagulation bath is compatible with a coagulation solvent (e.g., water) while being coagulated with polyethersulfone. The nonsolvent can be used alone or as a mixture of at least two kinds of nonsolvents. In some cases, the nonsolvent is preferably mixed with inorganic salt(s) such as ZnCl₂ or organic salt(s) such as alcohol(s), or a solvent. Considering the processibility, water is preferred as an additional solvent for this purpose.

An open-tubular fiber can be coagulated from the outside and inside of the fiber simultaneously, or coagulated either from the outside or the inside alone. The inner coagulation solution can be identical to the outer coagulation solution, or they can be different from each other. Alternately a gas can be injected. Where an open-tubular fiber is spun using a dry-wet method, the water permeability can be further improved if the injected inner coagulation solution is an organic solvent with less coagulation ability, such as ethanol. Such solvents may be used alone or mixed with water, or a mixture of water and a solvent such as dimethyl formamide.

Washing process follows the coagulation. Typically the membrane is washed with water, and at least three cycles of washing steps are carried out to remove the solvent in the film as much as possible.

Wet-heat treatment can be carried out in a bath comprising water mainly as required. While water-permeability is lowered generally if the membrane is dried, a membrane subjected to a wet-heat treatment can keep its water permeability even after a drying step, so it is effective. The wet-heat treatment is generally carried out, for example, at a temperature of 130°C±5°C for 60-120 minutes.

An open-tubular fiber membrane provided by this invention includes polyethersulfone, and thus, it has superior resistance to heat, chemicals and has superior mechanical characteristics. Furthermore, the included polyvinylpyrrolidone contributes to the hydrophilicity, and the included sulfonated polyethersulfone polymer further improves the hydrophilicity. In addition, since the open-tubular fiber membrane is negatively charged and electrically reacts against negatively-charged colloidal particles included in a normal river water, it has a considerably strong contamination resistance, and thus, it can be used for treating surface water or the like.

This invention will be described further with a reference to the following Example 1, though this invention is not limited thereby.

### EXAMPLE 1

A polymer dope composition was prepared by heating and stirring, at 50°C for six hours, 20 weight % of polyethersulfone (supplied by BASF), 7 weight % of polyvinylpyrrolidone (PVP), 10 weight % of glycerol, 1 weight % of sulfonated polyethersulfone, and 62 weight % of N-methyl-2-pyrrolidone (NMP). Viscosity of this dope composition was 55000CP. This polymer dope was spun at 50°C by a dry-wet method using an annular nozzle having a pore 1.7mm in diameter and a needle 0.5mm in diameter. For a solution to be injected in the needle, a 40°C NMP/PVP/water=10/5/85 in weight was used. In the dry-wet spinning, a fiber was passed through a dry zone under an atmosphere of temperature: 50°C; relative humidity: 90%; and length of the dry section: 10cm. In the following wet zone, 85°C water was used for a coagulation bath. The solvent and solution were removed from the coagulation bath. The winding speed was 20m/mim. After the coagulation, the fiber was washed with water, and treated with water including 10 weight % of glycerol. Later it was dried for one hour at 120°C. The obtained polyethersulfone open-tubular fiber including sulfonated polyethersulfone was 0.8mm in inner diameter, 1.3mm in outer diameter, and the water permeability was 300L/M²hrkg/cm².

The obtained open-tubular fiber was composed of 90 weight % of polyethersulfone, 5 weight % of polyvinylpyrrolidone, and 5 weight % of sulfonated polyethersulfone.

Ten thousand open-tubular fibers produced in accordance with Example 1 were bundled, linked with an adhesive to form an open-tubular fiber module having an effective length of 100cm. The effective membrane area was 25m². This module was used to treat 56m³/day of river water continuously for one month at a filtering pressure of 0.3kg/cm² and at temperatures ranging from 14 to 19°C. Stable flux was obtained during the treatment only by back-washing the membrane with permeation water having a flux twice that of the operation water permeate flux for 30 seconds per hour. The obtained water had turbidity lowered from 1/10 to 1/30 of the supplied water. Bacteria were removed completely, and 99.99% of MS2 viruses were removed successfully.

### COMPARATIVE EXAMPLE 1

15 weight % of polyethersulfone (supplied by BASF), 7 weight % of polyvinylpyrrolidone (PVP), 10 weight % of glycerol, and 68 weight % of N-methyl-2-pyrrolidone (NMP) were heated and stirred at 50°C for six hours to prepare a polymer dope composition. This dope was spun at 50°C in a dry-wet process according to Example 1.

The obtained polyethersulfone open-tubular fiber was 0.8mm in inner diameter, 1.3mm in outer diameter, and the water permeation rate was 600L/m²hrkg/cm². The obtained open-tubular fiber was composed of 95.5 weight % of polyethersulfone and 4.5 weight % of polyvinylpyrrolidone.

Ten thousand open-tubular fibers produced in accordance with Comparative Example 1 were bundled, linked with an adhesive to form an open-tubular fiber module having an effective length of 100cm. The effective membrane area was 25m². This module was used to treat 50m³/day of river water continuously for one month at a filtering pressure of 0.2kg/cm² and at temperatures ranging from 14 to 19°C. Stable flux was not obtainable during the treatment due to the pollution of the membrane unless the membrane was back-washed with permeation water having a flux twice that of the operation water permeate flux for 30 seconds in every 15 minutes. Bacteria were not removed completely, and removal rate of MS2 viruses was 98%.

## Claims

1. An ultrafiltration membrane comprising a composition including 40 to 99.5 weight % of polyethersulfone, 0.1 to 50 weight % of polyvinylpyrrolidone and 0.1 to 40 weight % of sulfonated polyethersulfone.

2. The ultrafiltration membrane according to claim 1, wherein the ultrafiltration membrane is a type selected from the group consisting of an open-tubular capillary membrane, a flat membrane, a tubular membrane, and a hollow-fiber membrane.

3. The ultrafiltration membrane according to claim 1 or claim 2, wherein the membrane has pores therein having a size sufficiently small to allow removal of bacteria or viruses and/or wherein the pore size is sufficiently small to allow removal of substances having a diameter of at least 5 nm.

4. The ultrafiltration membrane according to any of claims 1 to 3, wherein the sulfonated polyethersulfone is prepared by partially sulfonating a polysulfone comprising the following repeating unit (A):
-[O-C₆H₄-O-C₆H₄-SO₂-C₆H₄]- (A)
where -C₆H₄- is a phenylene group.

5. A dope composition for forming an ultrafiltration membrane comprising 16 to 22 weight % of polyethersulfone, 5 to 12 weight % of polyvinylpyrrolidone, 7 to 12 weight % of nonsolvent or swelling agent for the polyethersulfone, 0.1 to 10 weight % of sulfonated polyethersulfone, and 46 to 71.9 weight % of aprotic solvent.

6. The dope composition according to claim 5, wherein the sulfonated polyethersulfone is prepared by partially sulfonating a polysulfone comprising the following repeating unit (A):
-[O-C₆H₄-O-C₆H₄-SO₂-C₆H₄]- (A)
where -C₆H₄- is a phenylene group.

7. The dope composition according to claim 5 or claim 6, wherein the aprotic solvent comprises at least one solvent selected from the group consisting of dimethyl sulfoxide, dimethyl acetamide, dimethyl formamide, N-methyl-2-pyrrolidone and dioxane, preferably wherein the aprotic solvent comprises N-methyl-2-pyrrolidone.

8. The dope composition according to any of the claims 5 to 7, wherein the nonsolvent or the swelling agent for the polyethersulfone comprises at least one selected from the group consisting of ZnCl₂, alcohols, glycerol and water, preferably wherein the nonsolvent or the swelling agent for the polyethersulfone comprises glycerol.

9. The dope composition according to any of claims 5 to 8, wherein the viscosity of the dope composition ranges from 10 KcP to 1,000 KcP.

10. A method for producing an ultrafiltration membrane, said method comprising the steps of:
- providing a dope composition comprising 16 to 22 weight % of polyethersulfone, 5 to 12 weight % of polyvinylpyrrolidone, 7 to 12 weight % of nonsolvent or swelling agent for the polyethersulfone, 0.1 to 10 weight % of sulfonated polyethersulfone, and 46 to 71.9 weight % of aprotic solvent;
- forming a structure selected from the group consisting of a hollow structure and a flat structure comprising the dope composition by extruding or by applying the dope composition on a support; and
- removing the aprotic solvent and nonsolvent of the polyethersulfone in order to prepare a membrane selected from the group consisting of an open-tubular capillary membrane, a flat membrane, a tubular membrane and a hollow-fiber membrane.

11. The method according to claim 10, wherein the sulfonated polyethersulfone is prepared by partially sulfonating a polysulfone comprising the following repeating unit (A):
-[O-C₆H₄-O-C₆H₄-SO₂-C₆H₄]- (A)
where -C₆H₄- is a phenylene group.

12. The method according to claim 10 or claim 11, wherein the aprotic solvent comprises at least one solvent selected from the group consisting of dimethyl sulfoxide, dimethyl acetamide, dimethyl formamide, N-methyl-2-pyrrolidone and dioxane, preferably wherein the aprotic solvent comprises N-methyl-2-pyrrolidone.

13. The method according to any of claims 10 to 12, wherein the non-solvent or the swelling agent for the polyethersulfone comprises at least one selected from the group consisting of ZnCl₂, alcohols, glycerol and water, preferably wherein the nonsolvent or the swelling agent for the polyethersulfone comprises glycerol.

14. The method according to any of claims 10 to 13, wherein the viscosity of the dope composition ranges from 10 KcP to 1,000 KcP.

15. The method according to any of claims 10 to 14, wherein the step of forming a hollow structure comprising the dope composition comprises tubular fiber extrusion and/or wherein the step of forming a hollow structure comprising the dope composition comprises open-tubular fiber extrusion.
